# EUROPÄISCHE PATENTANMELDUNG

(11) **EP 1 745 729 A1**
(43) Veröffentlichungstag der Anmeldung: **24.01.2007**
(21) Anmeldenummer: 06012311.4
(22) Anmeldetag: 14.06.2006
(51) Int. Cl.: A47J 45/06

(54) **Bratpfanne mit Thermometer**

(30) Priorität: 18.07.2005 CN 200520113972; 22.08.2005 DE 102005039800
(71) Anmelder: Mingle Instruments GmbH Europe, 47877 Willich (DE)
(72) Erfinder: Ming, Ho Wai, Tai Po N.T. Hong Kong (CN); Bayerl, Rudolf, 47877 Willich (DE)
(74) Vertreter: LENZING GERBER

(57) **Zusammenfassung**

Die Erfindung betrifft eine Bratpfanne mit Temperaturanzeigefunktion, wobei die Bratpfanne einen Pfannengrundkörper (1) und einen Handgriff (2) aufweist, wobei weiter dem Pfannengrundkörper ein Temperatursensor (6) und dem Handgriff (2) ein Anzeigeeinheit (8) zugeordnet ist, wobei der Temperatursensor (6) und zugeordnete Anschlussleitungen (7) innerhalb einer Schutzröhre (9) angeordnet sind, die sich bis zu dem Handgriff (2) erstreckt.

## Beschreibung

Die vorliegende Erfindung betrifft eine Bratpfanne mit den Merkmalen des Oberbegriffs des Anspruchs 1.

Eine Bratpfanne wird regelmäßig zur Zubereitung von Mahlzeiten benutzt. Um eine gleichmäßige Temperaturverteilung im Boden der Bratpfanne zu gewährleisten, haben die meisten Bratpfannen üblicherweise eine metallische Platte mit einer bestimmten Dicke, die im Boden zwischen der Bratoberfläche und der Unterseite der Pfanne eingebettet ist. Solche Bratpfannen weisen jedoch keine Temperaturanzeige auf, so dass der Benutzer sich vollkommen auf seine Erfahrung verlassen muss, um die wesentlichen Faktoren bei der Zubereitung zu steuern. Diese sind beispielsweise die Zubereitungszeit, die Zeit bis zum Wenden des Lebensmittels und die zugeführte Wärmemenge. Deshalb kann ein zu geringes oder zu starkes Erhitzen des Lebensmittels bei der Zubereitung vorkommen.

Aus der deutschen Patentanmeldung DE 197 17 260 Al ist eine Bratpfanne bekannt, bei der in den Pfannengriff ein Digitalthermometer mit einer Anzeige integriert ist. Der Messfühler ist bei der bekannten Pfanne im Boden oder an einer anderen geeigneten Stelle angeordnet und überträgt seine Signale an das Digitalthermometer. Eine konkrete Ausführung des Pfannenbodens, des Messfühlers und der Verbindung zwischen dem Messfühler und dem Digitalthermometer ist nicht offenbart. Soweit diese Druckschrift Anregungen für eine technische Lösung gibt, sind diese nicht für den täglichen Gebrauch geeignet, denn es werden keinerlei Vorkehrungen für den Schutz der Komponenten bei Reinigung oder bei der Handhabung und beim Verstauen der Pfanne beschrieben.

Es ist deshalb Aufgabe der vorliegenden Erfindung, eine Bratpfanne mit einem Thermometer für die Temperatur des Pfannenbodens zu schaffen, die zuverlässig zu fertigen ist und die im täglichen Gebrauch die erforderliche Robustheit aufweist.

Diese Aufgabe wird von einer Bratpfanne mit den Merkmalen des Anspruchs 1 gelöst.

Weil der Temperatursensor und die Verbindungsleitungen in einer Schutzröhre angeordnet sind, die sich bis zu dem Handgriff erstreckt, können diese empfindlichen elektronischen Bauelemente gegenüber den Einflüssen im täglichen Gebrauch, beispielsweise beim Abwaschen, hinreichend geschützt werden.

Weitere bevorzugte Merkmale ergeben sich aus den abhängigen Patentansprüchen.

Im Einzelnen umfasst die Bratpfanne mit der Temperaturanzeigefunktion einen Pfannengrundkörper und einen Griff oder Stiel. Eine separate Bodenschicht ist an dem Boden des Pfannenkörpers angeordnet, und zwischen dem Boden des Pfannenkörpers und der zusätzlichen Bodenschicht ist eine metallische Platte vorgesehen. Der Temperatursensor ist in der metallischen Platte angeordnet, während die Anzeigeeinheit an dem Griff angeordnet ist. Der Temperatursensor ist mit der Anzeigeeinheit über Anschlussleitungen verbunden.

Eine Installationsbohrung ist an der Seitenwand der metallischen Platte angeordnet und erstreckt sich in die metallische Platte hinein. Der Temperatursensor ist an dem Ende der Installationsbohrung angeordnet, während die Anschlussleitung den Temperatursensor mit der Anzeigeeinheit durch die Seitenwand der zusätzlichen Bodenschicht verbindet.

Die beschriebene Installationsbohrung erstreckt sich etwa bis zu einem Punkt, der von der Seitenwand zu etwa 1/3 bis 2/3 auf den Mittelpunkt der metallischen Platte zuweist.

Die beschriebene Installationsbohrung ist unterhalb des Handgriffs angeordnet.

Der beschriebene Temperatursensor und die Anschlussleitungen sind innerhalb einer Schutzröhre angeordnet, welche sich bis zu dem Griff erstreckt.

Der Temperatursensor und die Schutzröhre sind fest mit der Unterseite des Pfannenkörpers verbunden.

Der beschriebene Temperatursensor und die ihm zugeordnete Schutzröhre weisen untereinander einen guten Wärmeübergang auf. Zusätzlich weist auch die Schutzröhre einen guten Wärmeübergang zwischen dem Boden des Pfannenkörpers und der metallischen Platte auf.

Der Temperatursensor ist hoch temperaturfest. Die beschriebene Schutzröhre ist ebenfalls hoch temperaturfest und weitgehend schlagfest. Sie ist als metallische Röhre ausgebildet. Der Temperatursensor und die Anschlussleitungen sind innerhalb der Schutzröhre elektrisch isoliert. Die Schutzröhre ist hermetisch verschlossen. Die Schutzröhre ist ebenfalls innerhalb der metallischen Platte hermetisch verschlossen. Der Abschnitt der Schutzröhre, der innerhalb der metallischen Platte verläuft, weist einen geringeren Durchmesser auf als der Abschnitt der Schutzröhre, der außerhalb der metallischen Platte verläuft.

Die Anzeigeeinheit ist an der Oberfläche des Handgriffs angeordnet. Sie kann von einer LCD-Anzeige oder einer LED-Anzeige gebildet sein.

Weil die metallische Platte eine gewisse Dicke aufweist, ist die Installationsbohrung an der Seite der metallischen Platte angeordnet, wobei der hochtemperaturfeste Temperatursensor am Boden der als Sackbohrung ausgebildeten Installationsbohrung angeordnet. Der Sensor detektiert die Temperatur des Pfannenbodens im Gebrauch und zeigt die Temperatur schnell und präzise durch die Anzeigeeinheit an, was dem Benutzer eine bessere Kontrolle der Zubereitungstemperatur und der erforderlichen Zubereitungszeit ermöglicht.

Ein Ausführungsbeispiel der vorliegenden Erfindung ist in der beigefügten Zeichnung beschrieben. Es zeigen:
- Figur 1:: Einen Querschnitt durch eine Bratpfanne mit einer Temperaturanzeigefunktion;
- Figur 2:: den Bereich A in Figur 1 in einer vergrößerten Darstellung; sowie
- Figur 3:: eine Draufsicht in Richtung B in Figur 1 auf die Anzeigeeinheit.

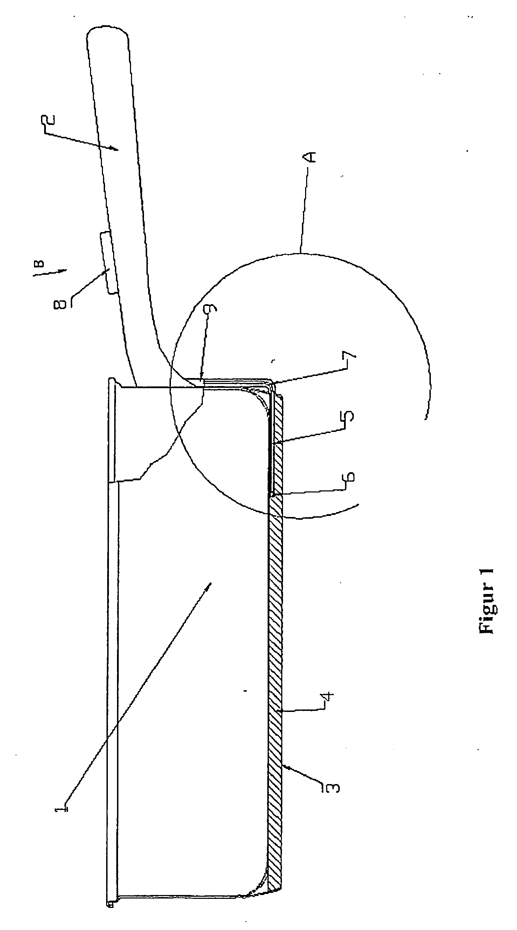

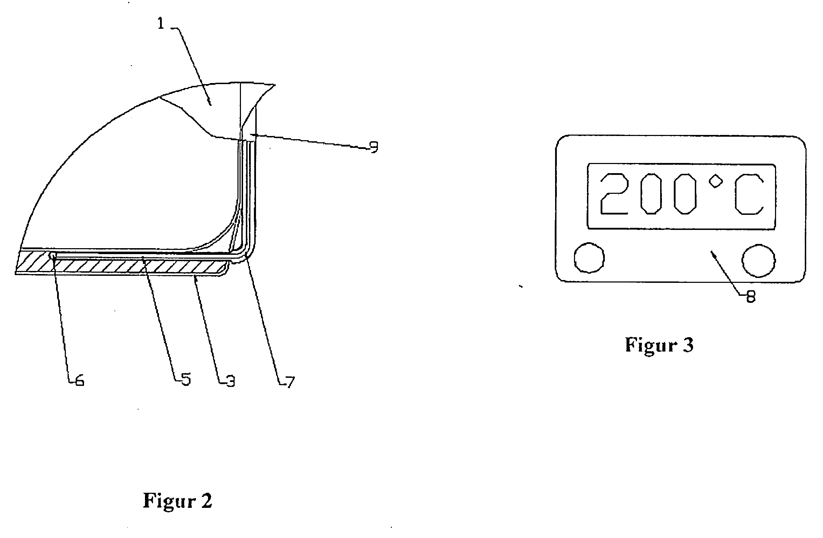

Wie in den Figuren 1 und 2 dargestellt, ist ein Handgriff 2 seitlich an dem Grundkörper 1 der Pfanne angeordnet. An der Unterseite des Grundkörpers 1 ist eine separate Bodenschicht 3 ausgebildet und zwischen dem Grundkörper 1 und der Bodenschicht 3 ist eine metallische Platte 4 vorgesehen. Eine Installationsbohrung 5 ist unterhalb des Handgriffs 2 seitlich in die metallische Platte 4 eingebracht. Diese Installationsbohrung 5 erstreckt sich etwa zur Hälfte auf den Mittelpunkt der metallischen Platte 4 zu.

Obwohl die ideale Position für den Temperatursensor die Mitte der metallischen Platte wäre, ist es ausreichend, die Installationsbohrung nur etwa 1/3 bis 2/3 des Abstandes zwischen dem Rand und dem Mittelpunkt der metallischen Patte 4 einzubringen, denn die metallische Platte 4 weist eine gute Wärmeleitfähigkeit auf. Die geringere Tiefe der Installationsbohrung 5 vereinfacht die Fertigung und die Montage.

Ein hochtemperaturbeständiger Temperatursensor 6 ist an dem Ende der Installationsbohrung 5 angeordnet. Seine Anschlussleitung 7 verbindet eine Anzeigeeinheit 8 an dem Handgriff 2 durch die Seitenwände der separaten Bodenschicht 3 mit dem Temperatursensor. Die Anzeigeeinheit 8 ist an dem Handgriff 2 in der Nähe des Grundkörpers 1 angeordnet. Um die Anschlussleitung 7 und den Temperatursensor 6 vor Fehlfunktionen aufgrund von Beschädigungen zu schützen, ist eine Schutzröhre 9 vorgesehen, um den Temperatursensor 6 und die Anschlussleitung 7 zu umschließen. Diese Schutzröhre erstreckt sich bis zu dem Handgriff 2.

Die Schutzröhre 9 ist hermetisch verschlossen, so dass im Gebrauch keine Flüssigkeiten in die Schutzröhre 9 eindringen können. Die Schutzröhre 9 ist weiter wärmeleitend in die metallische Platte 4 eingesetzt, vorzugsweise mit einem wärmeleitenden, pastösen und gegebenenfalls aushärtbaren Material, welches auch den Spalt zwischen der Schutzröhre 9 und der Innenseite der Installationsbohrung 5 ausfüllt.

Auch die Anzeigeeinheit 8 ist wasserfest und beständig gegenüber den in Betrieb auftretenden Temperaturen.

## Patentansprüche

1. Bratpfanne mit Temperaturanzeigefunktion, wobei die Bratpfanne einen Pfannengrundkörper 1 und einen Handgriff 2 aufweist, wobei weiter dem Pfannengrundkörper ein Temperatursensor 6 und dem Handgriff 2 ein Anzeigeeinheit 8 zugeordnet ist, **dadurch gekennzeichnet, dass** der Temperatursensor 6 und zugeordnete Anschlussleitungen 7 innerhalb einer Schutzröhre 9 angeordnet sind, die sich bis zu dem Handgriff 2 erstreckt.

2. Bratpfanne nach Anspruch 1, **dadurch gekennzeichnet, dass** der Temperatursensor in einer Installationsbohrung 5 einer metallischen Platte 4 im Boden der Pfanne angeordnet ist.

3. Bratpfanne nach einem der vorhergehenden Ansprüche, **dadurch gekennzeichnet, dass** der Pfannenboden sandwichartig aus der Unterseite des Grundkörpers 1, einer separaten Bodenschicht 3 und einer mechanischen Platte 4 aufgebaut ist.

4. Bratpfanne nach einem der vorhergehenden Ansprüche, **dadurch gekennzeichnet, dass** die metallische Platte 4 eine Installationsbohrung 5 aufweist, die sich von einer Seite der metallischen Platte 4 auf das Zentrum der metallischen Platte 4 zu erstreckt.

5. Bratpfanne nach einem der vorhergehenden Ansprüche, **dadurch gekennzeichnet, dass** die Tiefe der Installationsbohrung zwischen 1/3 und 2/3 des Radius der metallischen Platte 4 oder 1/3 bis 2/3 des Abstandes von dem Rand der metallischen Platte 4 zu ihrem Mittelpunkt beträgt.

6. Bratpfanne nach einem der vorhergehenden Ansprüche, **dadurch gekennzeichnet, dass** die Installationsbohrung 5 unterhalb des Handgriffs 2 angeordnet ist.

7. Bratpfanne nach einem der vorhergehenden Ansprüche, **dadurch gekennzeichnet, dass** der Temperatursensor 6 und seine Schutzröhre 9 hoch temperaturfest sind und dass die Schutzröhre 9 eine metallische Röhre mit hoher Schlagfestigkeit ist.

8. Bratpfanne nach einem der vorhergehenden Ansprüche, **dadurch gekennzeichnet, dass** der Temperatursensor 6 und die Anschlussleitungen 7 in der Schutzröhre elektrisch isoliert sind.

9. Bratpfanne nach einem der vorhergehenden Ansprüche, **dadurch gekennzeichnet, dass** die Schutzröhre 9 hermetisch verschlossen und dicht in die metallische Platte 4 eingesetzt ist.

10. Bratpfanne nach einem der vorhergehenden Ansprüche, **dadurch gekennzeichnet, dass** der in der metallischen Platte 4 angeordnete Teil der Schutzröhre 9 einen geringeren Durchmesser aufweist als der außerhalb der Metallischen Platte 4 angeordnete Abschnitt.

11. Bratpfanne nach einem der vorhergehenden Ansprüche, **dadurch gekennzeichnet, dass** die Anzeigeeinheit 8 an der Oberseite des Handgriffs 2 angeordnet ist.
